# EUROPEAN PATENT APPLICATION

(11) **EP 1 883 235 A2**
(43) Date of publication of application: **30.01.2008**
(21) Application number: 07112973.8
(22) Date of filing: 23.07.2007
(51) Int. Cl.: H04N 7/01

(54) **Image processing apparatus, display apparatus and image processing method**

(30) Priority: 22.12.2006 KR 20060133024; 28.07.2006 KR 20060071466
(71) Applicant: Samsung Electronics Co., Ltd, Suwon-si, Gyeonggi-do 443-742 (KR)
(72) Inventor: Park, Sung-jae Hyundai I'Park Apt. East-1904, Gyeonggi-do (KR)
(74) Representative: Grootscholten, Johannes A.M.

(57) **Abstract**

An image processing apparatus including: an image processor which processes an image corresponding to an image signal; a frame rate converter which converts a frame rate of the image corresponding to the image signal that is processed by the image processor; and a controller which controls at least one of the image processor and the frame rate converter to convert the frame rate of the image corresponding to the image signal if the frame rate of the image corresponding to the image signal is different from a reference frame rate.

## Description

### BACKGROUND OF THE INVENTION

### Field of the Invention

Apparatuses and methods consistent with the present invention relate to an image processing apparatus, a display apparatus and an image processing method, and more particularly, to an image processing apparatus which adjusts a frame rate of an overlapping image while keeping a display quality of an image, and a display apparatus and an image processing method.

### Description of the Related Art

An image processing apparatus or a display apparatus (hereinafter, to be called "image processing apparatus" as a whole) such as a TV or a set-top box which processes an inputted image signal to display an image. The image signal processed by the image processing apparatus has an inherent frame rate ("refresh rate" or "refresh frequency"). The frame rate of the image signal may vary according to a color encoding system. For example, the frame rate of a Phase-Alternating Line (PAL) or Sequential Couleur à Mémoire (SECAM) system is 50Hz while the frame rate of a National Television System Committee (NTSC) system is 60Hz.

If the frame rate is 50Hz, an image may sometimes flicker in image processing apparatuses, due to an unstable motion.

To solve the foregoing problem, an image processing technique such as a frame rate conversion (FRC) is used to increase the frame rate by a predetermined value. For example, the frame rate of 50Hz may be converted into a frame rate ranging from 60Hz to 100Hz. The FRC includes processes of calculating a motion vector of frames of the image and estimating motion sizes thereof. That is, brightness differences between pixels in a certain frame and a motion variation in consecutive frames are used in estimating the motions.

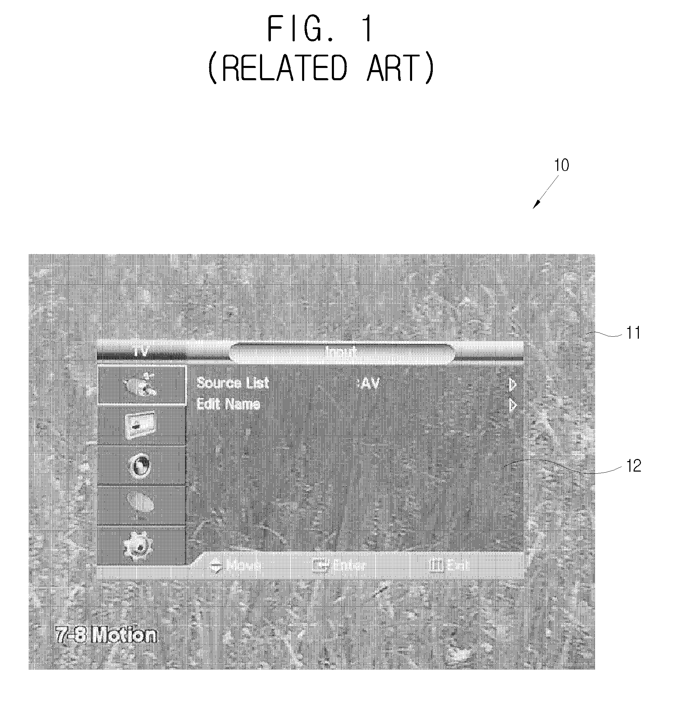

As shown in FIG. 1, an image 10 that is displayed by the image processing apparatus includes a main image 11 which serves as a background and an overlapping image 12 such as an on screen display (OSD) menu which overlaps a predetermined region of the main image 11 to be displayed. In this case, if a frame rate of the image is converted, brightness differences between pixels and a motion variation between the frames are not properly estimated in an overlapping region due to the overlapping image 12. Thus, the image is broken around the overlapping region, thereby lowering the displayed quality of the image.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above. Accordingly, it is an aspect of the present invention to provide an image processing apparatus and method, which convert a frame rate of an overlapping image while keeping a display quality of an image.

Also, it is another aspect of the present invention to provide an image processing apparatus and method, which convert a frame rate of an image that is supplied from the outside while keeping a display quality of an image.

Additional aspects and/or features of the present invention will be set forth in part in the description which follows and, in part, will be obvious from the description, or may be learned by practice of the present invention.

The foregoing and/or other aspects of the present invention are also achieved by providing an image processing apparatus, comprising: an image processor which processes an image corresponding to an image signal; a frame rate converter which converts a frame rate of the image corresponding to the image signal that is processed by the image processor; and a controller which controls at least one of the image processor and the frame rate converter to convert the frame rate of the image corresponding to the image signal in response to it being determined that the frame rate of the image corresponding to the image signal is different from a reference frame rate.

According to an aspect of the invention, the image processor selectively outputs the processed image signal to the frame rate converter, and the controller controls the image processor to output a processed image signal to the frame rate converter in response to it being determined that the frame rate of the image corresponding to the image signal is different from the reference frame rate.

According to an aspect of the invention, the frame rate converter selectively converts the frame rate of the image corresponding to the image signal processed by the image processor, and the controller controls the frame rate converter to convert the frame rate of the image corresponding to the image signal in response to it being determined that the frame rate of the image corresponding to the image signal is different from the reference frame rate.

According to an aspect of the invention, in response to an image of an image signal inputted to the frame rate converter having a main image and an overlapping image that overlaps a part of the main image, the controller controls the frame rate converter so that an overlapping image region of an inserted frame is copied from one of the corresponding regions of inputted image frames of the image signal inputted for an increase of the frame rate.

According to an aspect of the invention, the image processing apparatus further comprises a receiver which receives an image signal having overlapping region information on the overlapping image region, wherein the controller controls the frame rate converter to convert the frame rate of the image based on the overlapping region information.

According to an aspect of the invention, the controller detects the overlapping image region based on brightness differences between pixels of the image inputted to the frame rate converter, and controls the frame rate converter to convert the frame rate of the image based on the detected overlapping image region.

According to an aspect of the invention, the image processing apparatus further comprises a storage part which stores overlapping region information on the overlapping image region, wherein the controller controls the frame rate converter based on the overlapping region information stored in the storage part.

According to an aspect of the invention, the image processing apparatus further comprises a user input part which receives a user's command, wherein in response to the user's command and the image corresponding to the image signal inputted to the frame rate converter including a main image and an overlapping image that overlaps the part of the main image, the controller controls the frame rate converter so that an overlapping image region of an inserted frame is copied from one of corresponding regions of inputted image frames regions for an increase of the frame rate.

According to an aspect of the invention, the controller controls the image processor to convert a frame rate of an overlapping image region and a frame rate of a remaining region of the inputted image independently from each other to increase the frame rate, in response to the image corresponding to the image signal having a main image and an overlapping image that overlaps a part of the main image.

According to an aspect of the invention, the image processing apparatus further comprises a display part which includes a plasma display panel to display the frame rate converted image based on the image signal.

According to another aspect of the present invention an image processing apparatus is provided, comprising: an image processor which processes an image corresponding to an image signal; and a frame rate converter which converts a frame rate of the image corresponding to the image signal that is processed by the image processor, wherein, in response to the image corresponding to the image signal inputted to the frame rate converter having a main image and an overlapping image that overlaps a part of the main image, the frame rate is converted such that a region of the overlapping image of an inserted frame may be copied from one of corresponding regions of inputted image frames for an increase of the frame rate.

According to another aspect of the present invention an image processing apparatus is provided, comprising: an image processor which processes an image corresponding to an image signal; a frame rate converter which converts a frame rate of the image corresponding to the image signal that is processed by the image processor; and a controller which controls the image processor to convert the frame rate of an overlapping image region and a remaining region of the inputted image independently from each other to increase the frame rate in response to the image corresponding to the image signal inputted to the frame rate converter including a main image and an overlapping image that overlaps a part of the main image.

According to another aspect of the present invention an image processing method is provided, comprising: determining whether a frame rate of an image corresponding to an image signal is different from a reference frame rate; and converting the frame rate of the image corresponding to the image signal in response to the frame rate of the image being different from the reference frame rate.

According to an aspect of the invention, the converting of the frame rate comprises, if the image includes a main image and an overlapping image that overlaps a part of the main image, inserting a frame comprising a region of the overlapping image copied from one of the corresponding regions of inputted image frames for an increase of the frame rate.

According to an aspect of the invention, the image processing method further comprises receiving an image signal having overlapping region information on the overlapping image region, wherein the inserting of the frame having the copied overlapping image region comprises inserting the frame having the copied overlapping image region is based on the received overlapping region information.

According to an aspect of the invention, the converting of the frame rate further comprises detecting the overlapping image region based on brightness differences between pixels of the image, and the inserting of the copied frame based on the detected overlapping region information.

According to an aspect of the invention, the image processing method further comprises storing overlapping region information on the overlapping image region, wherein the inserting of the copied frame based on the stored overlapping region information.

According to an aspect of the invention, the converting of the frame rate comprises detecting an overlapping image region based on brightness differences between pixels of the image to increase the frame rate in response to the image including a main image and an overlapping image that overlaps a part of the main image; receiving a user's command whether to insert a frame whose overlapping image region is copied from a region corresponding to frames of the inputted image, and inserting the frame having the copied overlapping image region selectively according to the user's command.

According to another aspect of the present invention an image processing method is provided, comprising: determining whether an image corresponding to an image signal includes a main image and an overlapping image that overlaps a part of the main image; and inserting, in response to the image including a main image and an overlapping image that overlaps the part of the main image, a frame comprising a region of the overlapping image copied from one of corresponding regions of inputted image frame regions of the image signal for an increase of the frame rate of the image.

According to another aspect of the present invention an image processing method is provided, comprising: determining whether an image corresponding to an image signal includes a main image and an overlapping image that overlaps a part of the main image; and converting a frame rate of the overlapping image region and a remaining region of the inputted image independently from each other to increase the frame rate of the image in response to the image including the main image and the overlapping image that overlaps the part of the main image.

### BRIEF DESCRIPTION OF THE DRAWINGS

The above and/or other aspects of the present invention will become apparent and more readily appreciated from the following description of the exemplary embodiments, taken in conjunction with the accompanying drawings of which:
FIG. 1 illustrates an image which is displayed by a image processing apparatus in the related art;
FIG. 2 is a block diagram of an image processing apparatus according to a first exemplary embodiment of the present invention;
FIG. 3 illustrates an image which is displayed by the image processing apparatus according to the first exemplary embodiment of the present invention;
FIG. 4 is a flowchart to illustrate an image processing method according to the first exemplary embodiment of the present invention;
FIG. 5 is a block diagram of an image processing apparatus according to a second exemplary embodiment of the present invention;
FIG. 6 is a flowchart illustrating an operation of a display apparatus according to the second exemplary embodiment of the present invention; and
FIG. 7 is a block diagram of an image processing apparatus according to a third exemplary embodiment of the present invention.

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

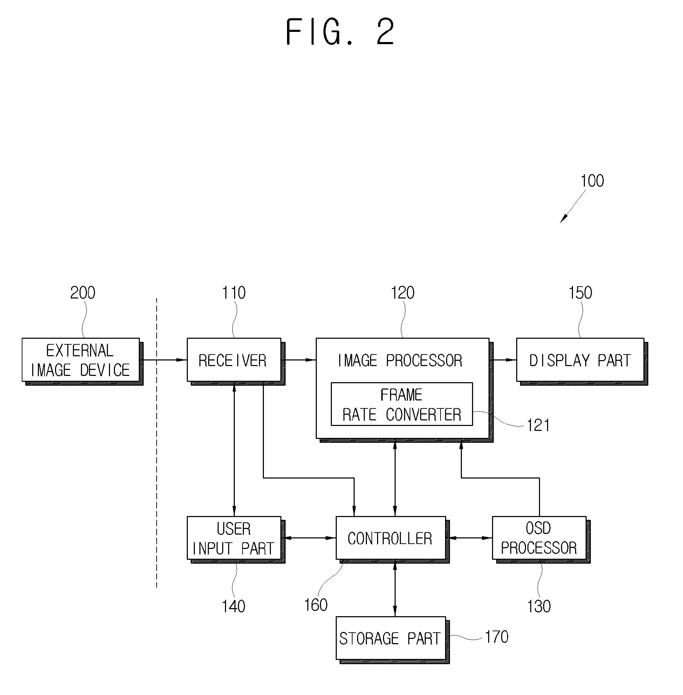

FIG. 2 is a block diagram of an image processing apparatus 100 according to a first exemplary embodiment of the present invention. The image processing apparatus 100 includes a receiver 110, an image processor 120, an OSD processor 130, a user input part 140, a display part 150, a controller 160 and a storage part 170. The image processing apparatus 100 may include a TV or a set-top box. If the image processing apparatus 100 includes a set-top box, the display part 150 may not be provided.

The receiver 110 is connected with an external image device 200 to receive an image signal therefrom. The receiver 110 receives the image signal from the external image device 200 by a control of the controller 160. According to another exemplary embodiment of the present invention, the receiver 110 may receive an image signal corresponding to an analog TV broadcast, a DTV broadcast, etc., from broadcasting stations (not shown).

The image signal received by the receiver 110 includes information on images. The format of the image signal may conform to various interfaces including an RCA compatible interface, a High Definition Multimedia Interface (HDMI), a Digital Visual Interface (DVI), etc. The external image device 200 may include a digital video disk (DVD) player, a video cassette recorder (VCR), a personal computer (PC), a television (TV) set-top box, etc. If the external image device 200 includes a TV set-top box, the image processing apparatus 100 may include a TV corresponding to the concerned set-top box.

The image processor 120 receives the image signal from the receiver 110, and processes the image signal according to the control of the controller 160. The image processor 120 may decode the image signal corresponding to the format thereof, process the image signal to improve a display quality of the image or scale the image signal to adjust the size of an image.

The image processor 120 according to the first exemplary embodiment of the present invention includes a frame rate converter 121 which increases a frame rate of an image to remove screen-flickering. The frame rate converter 121 inserts frames based on current image frames forming images. The number of inserted frames is corresponded to the frame rate to be increased. For example, if the frame rate of 50Hz is converted into 60Hz, the frame rate converter 121 increases five original frames into six frames.

The frame rate converter 121 may increase the frame rate of the image according to the control of the controller 160. For example, the frame rate converter 121 may increase the frame rate by processing a predetermined region of a frame to be copied, based on the motion change interpolation or regardless of the motion, with one of the corresponding predetermined regions of the frames. The controller 160 determines where and how to insert the frames.

The OSD processor 130 generates an OSD menu to operate the image processing apparatus 100 according to the control of the controller 160. The OSD menu generated by the OSD processor 130 is mixed with a main image by the image processor 120.

The user input part 140 receives a user's command to operate the image processing apparatus 100. The user input part 140 transmits the inputted user's command to the controller 160. The user input part 140 may include a remote controller.

The display part 150 displays an image that is processed by the image processor 120. The display part 150 may include a plasma display panel (PDP).

The controller 160 controls the image processing apparatus 100 as a whole. The controller 160 controls the receiver 110 and the image processor 120 according to the user's command inputted by the user input part 140 to display the image corresponding to the image signal inputted from the external image device 200, on the display part 150.

If the image (hereinafter, to be called "inputted image") inputted to the frame rate converter 121 includes a main image and an overlapping image overlapping a part of the main image, the controller 160 controls the frame rate converter 121 so that an overlapped region having the overlapping image (herein after will be referred as "overlapping region") of a frame may be copied from one of the corresponding inputted image frames regions when the frame is inserted for the increase of the frame rate, thereby increasing the frame rate of the image. The overlapping image region refers to a region where the overlapping image overlaps the main image.

For example, the overlapping image may include the OSD menu. The overlapping image includes a subtitle OSD as well as the OSD menu. The overlapping image further includes all images that overlap the main image.

Examples of the overlapping image included in the image inputted to the frame rate converter 121 may include, but are not limited to: an OSD menu being included in an image of an image signal outputted by the external image device 200, an OSD menu being included in an image of a broadcasting image signal, and an OSD menu which is generated by the OSD processor 130 overlapping an image of an image signal received by the receiver 110.

Then, the controller 160 controls the frame rate converter 121 to <49>interpolate a region of the main image based on the motion change, excluding the overlapping region, thereby removing the image-flickering and image-breaking by the overlapping image.

The controller 160 may determine the overlapping region with various methods. For example, if the overlapping image includes the OSD menu generated by the OSD processor 130, the storage part 170 stores overlapping region information on a screen position and size of the OSD menu in advance, and the controller 160 controls the frame rate converter 121 based on the stored overlapping region information.

If the overlapping image includes the OSD menu generated by the external image device 200 or if the overlapping image is included in the image of the broadcasting image signal, the controller 160 may extract the overlapping region information from the image signal received by the receiver 110. In this case, the image signal may include overlapping region information of a data packet format. The controller 160 determines whether the image signal received by the receiver 110 includes the overlapping region information. If the image signal includes the overlapping region information, the controller 160 extracts the overlapping region information and controls the frame rate converter 121 based on the extracted overlapping region information.

According to another exemplary embodiment of the present invention, the controller 160 may scan the inputted image to detect the position and size of the overlapping image. The controller 160 determines whether the image overlaps, based on the brightness differences between pixels of the inputted image.

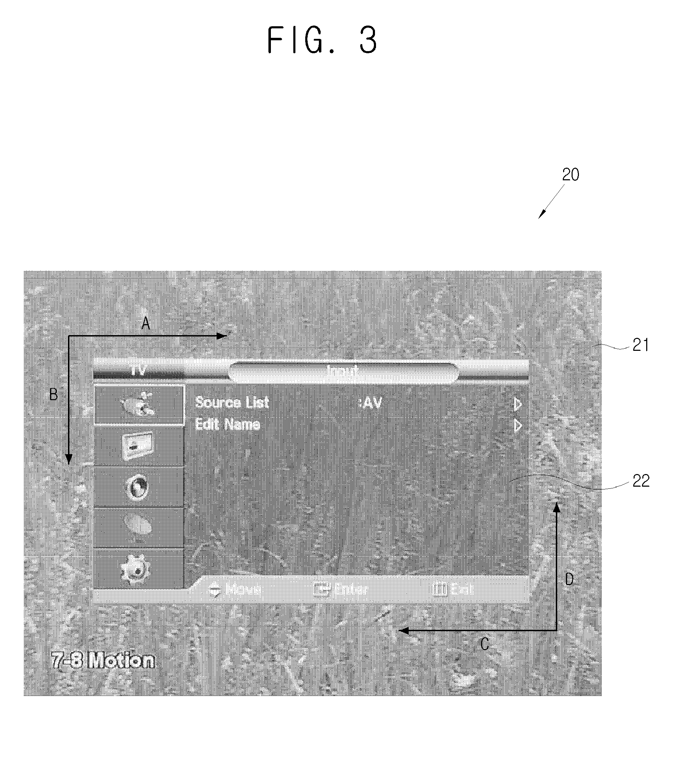

Hereinafter, a process of detecting the overlapping region from an image 20 having a main image 21 and an overlapping image 22 will be described with reference to FIG. 3. The controller 160 determines whether pixels whose brightness difference with neighboring pixels in A, B, C and D directions is within a predetermined value. If the consecutive number of pixels whose brightness values do not vary over the predetermined value exceeds a predetermined number or some threshold, the controller 160 may determine the pixels as one lateral side of the overlapping region. For example, if the determined plural lateral sides indicate a rectangle shape, the controller 160 may determine this region as an overlapping region. Then, the controller 160 may control the frame rate converter 121 based on the determined overlapping region.

Even if the overlapping region is determined, the controller 160 may control not to insert the frame having the copied overlapping region, according to a user's command, due to a possible error in determining the overlapping region. After detecting the overlapping region, the controller 160 may control the OSD processor 130 to display a user interface (UI) (not shown) to confirm whether the detected region is the OSD menu. If it is confirmed that there is an error in determining the overlapping region, the controller 160 may control to interpolate the whole of the inserted frames based on motion change.

The controller 160 may be embodied as a computer program. The controller 160 may include a read only memory (ROM) and a random access memory (RAM) which store the computer program, and/or a microprocessor such as a CPU to execute the computer program.

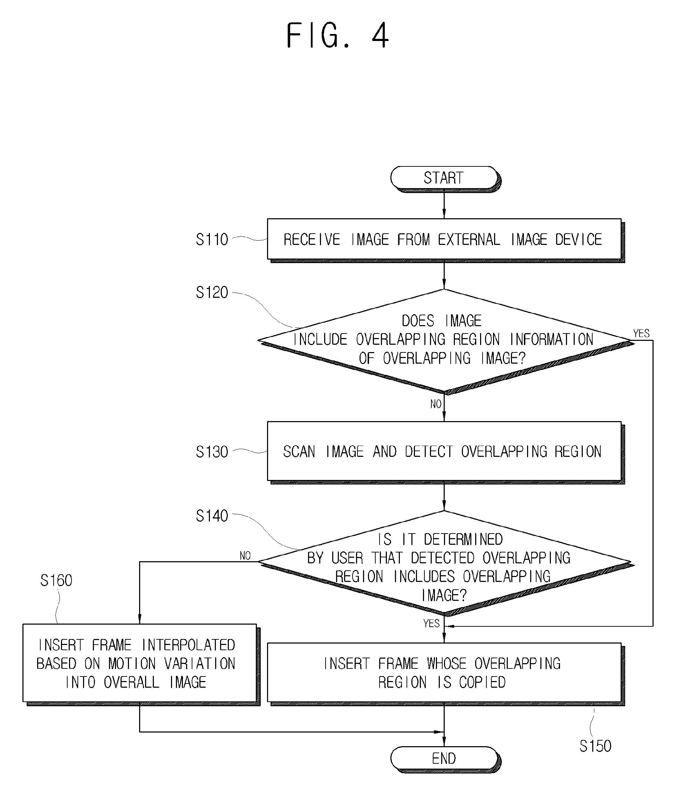

FIG. 4 is a flowchart to illustrate an image processing method according to the first exemplary embodiment of the present invention. First, the image processing apparatus 100 receives the image signal from the external image device 200 or broadcasting stations (S110). Then, the controller 160 determines whether the received image signal includes the overlapping region information on the position and size of the overlapping image (S120).

If it is determined in operation S120 that the received image signal includes the overlapping region information on the position and size of the overlapping image, the controller 160 controls the frame rate converter 21 so that the overlapping region of an inserted frame may be copied from one of the corresponding inputted image frames for the increase of the frame rate (S150). The overlapping region corresponds to the overlapping region information. The frame rate converter 121 interpolates the region of the main image based on the motion change excluding the overlapping region, thereby increasing the frame rate of the image.

If it is determined in operation S120 that the received image signal does not include the overlapping region information, the controller 160 scans the image inputted to the frame rate converter 121 to detect the overlapping region (S130). Then, the controller 160 provides the determined overlapping region with a user to determine whether the detected region is the overlapping region where the overlapping image overlaps the image (S140).

If it is determined in operation S140 that the detected region is the overlapping region where the overlapping image overlaps the main image, the controller 160 controls the frame rate converter 121 so that the overlapping region of an inserted frame detected at the operation of S130 may be copied from one of the corresponding inputted image frames for the increase of the frame rate (S150). The frame rate converter 121 interpolates the region of the main image based on the motion change.

If a user determines that the detected region does not correspond to the overlapping image in operation S140, the controller 160 controls the frame rate converter 121 to interpolate the region of the main image based on the motion change (S150).

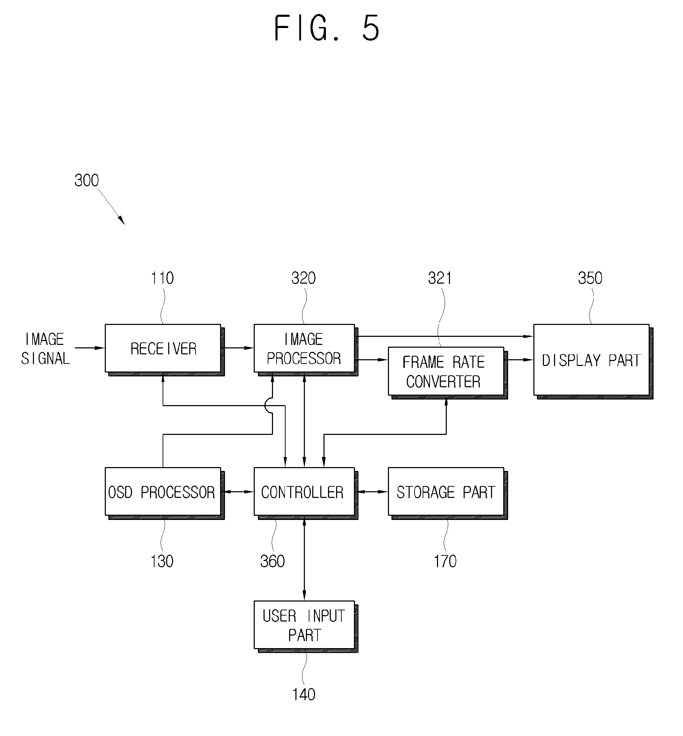

FIG. 5 is a block diagram of an image processing apparatus 300 according to a second exemplary embodiment of the present invention.

The image processing apparatus 300 according to the second exemplary embodiment of the present invention includes a receiver 110, an image processor 320, an OSD processor 130, a user input part 140, a display part 350, a controller 360 and a storage part 170. The receiver 110, the OSD processor 130, the user input part 140 and the storage part 170 of the image processing apparatus 300 according to the second exemplary embodiment of the present invention are the same or similar to those according to the first exemplary embodiment of the present invention.

The image processor 320 receives an image signal from the receiver 320, and decodes the image signal according to a format thereof, and may additionally process the image signal to improve the displayed quality and/or scale the image signal to adjust a size of an image. The image processor 320 according to the second exemplary embodiment of the present invention does not include the frame rate converter 321.

The image processor 320 selectively outputs the processed image signal either to the display part 350 or to the frame rate converter 321 according to a control of the controller 360. The image processor 320 according to the second exemplary embodiment of the present invention is the same or similar to the image processor 120 according to the first exemplary embodiment of the present invention, other than the special feature of its own.

The frame rate converter 121 converts the frame rate of the image signal inputted from the image processor 320 to be outputted to the display part 350. The frame rate converter 321 increases or decreases the frame rate of the image according to the control of the controller 360. The frame rate converter 321 which increases the frame rate of the image according to the second exemplary embodiment of the present invention may be the same or similar to that according to the first exemplary embodiment of the present invention.

The display part 350 receives the image signal from the image processor 320 or the frame rate converter 321 to display the image based on the image signal. The display part 350 according to the second exemplary embodiment of the present invention may be the same or similar to that according to the first exemplary embodiment of the present invention.

The controller 360 controls the image processing apparatus 300 as a whole. The controller 360 controls the receiver 110, the image processor 320 and the frame rate converter 321 to display the image corresponding to the image signal received from the external image device 200 or broadcasting stations, on the display part 350.

The controller 360 determines whether to convert the frame rate of the image corresponding to the image signal received by the receiver 110, and controls the image processor 320 to output the image signal to the frame rate converter 321 if it is determined to convert the frame rate thereof.

If it is determined not to convert the frame rate of the image corresponding to the image signal, the controller 360 controls the image processor 320 to output the image signal directly to the display part 350, instead of outputting to the frame rate converter 321.

The controller 360 may determine whether to convert the frame rate of the image corresponding to the image signal received by the receiver 110 according to a predetermined setting. For example, if the frame rate of the image corresponding to the image signal received by the receiver 110 is different from a preset reference frame rate, the controller 360 may determine to convert the frame rate of the image corresponding to the image signal. The reference frame rate may be stored in the storage part 170.

More specifically, if the frame rate of the image is higher than the reference frame rate, the controller 360 controls the frame rate converter 321 to decrease the frame rate of the image. If the frame rate of the image is lower than the reference frame rate, the controller 360 controls the frame rate converter 321 to increase the frame rate of the image.

The controller 360 which controls to increase the frame rate of the image according to the second exemplary embodiment of the present invention may be the same or similar to that according to the first exemplary embodiment of the present invention.

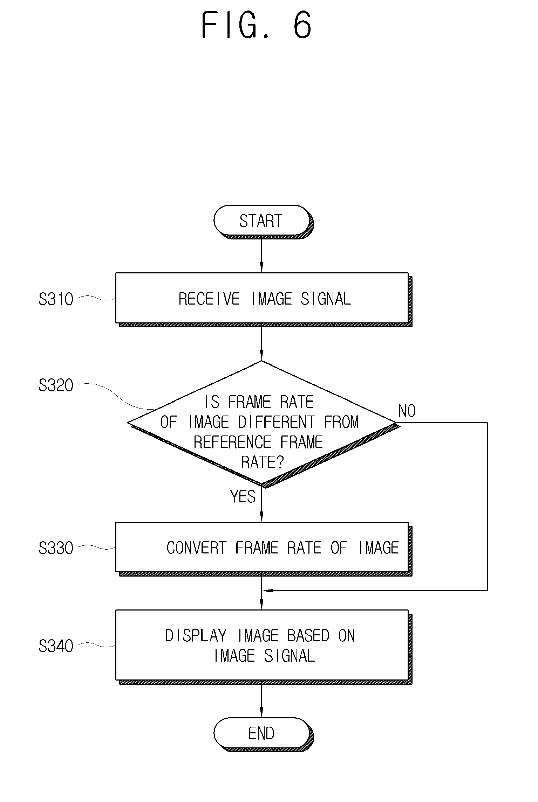

FIG. 6 is a flowchart illustrating an operation of the display apparatus 300 according to the second exemplary embodiment of the present invention. First, the receiver 110 receives the image signal from the external image device 200 or broadcasting stations (S310).

The controller 360 determines whether the frame rate of the image corresponding to the image signal received by the receiver 110 is different from the preset reference frame rate, and whether to convert the frame rate of the image corresponding to the image signal (S320).

If it is determined in operation S320 that the frame rate of the image corresponding to the image signal received by the receiver 110 is different from the preset reference frame rate, the controller 360 controls the image processor 320 to output the image signal processed by the image processor 320 to the frame rate converter 321, and controls the frame rate converter 321 to convert the frame rate of the image corresponding to the inputted image signal (S330).

The operation of S330 to increase the frame rate of the image shown in FIG. 6 may include the steps of S120 to S160 in FIG. 4.

If it is determined in operation S320 that the frame rate of the image corresponding to the image signal received by the receiver 110 is not different from the preset reference frame rate, or if operation S330 is performed, the display part 350 displays the image thereon based on the processed image signal (S340).

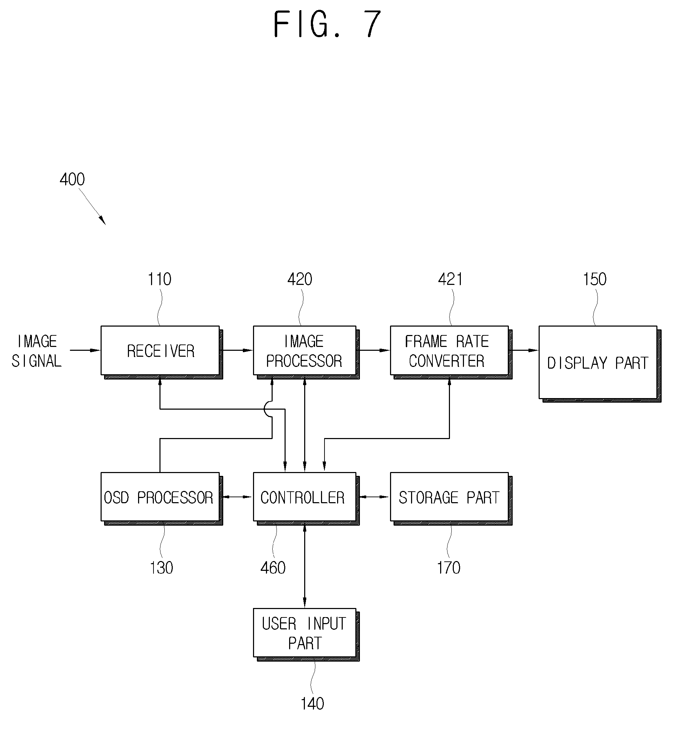

FIG. 7 is a block diagram of an image processing apparatus 400 according to a third exemplary embodiment of the present invention.

The image processing apparatus 400 according to the third exemplary embodiment of the present invention includes a receiver 110, an image processor 420, an OSD processor 130, a user input part 140, a display part 150, a controller 460 and a storage part 170. The receiver 110, the OSD processor 130, the user input part 140, the display part 150 and the storage part 170 of the image processing apparatus 400 according to the third exemplary embodiment of the present invention may be the same or similar to those according to the first and/or second exemplary embodiments of the present invention.

The image processor 420 receives an image signal from the receiver 110, and decodes the image signal according to a format thereof, processes the image signal to improve a display quality and scales the image signal to adjust a size of an image. The image processor 420 according to the third exemplary embodiment of the present invention outputs the processed image signal directly to the frame rate converter 421. The image processor 420 according to the third exemplary embodiment of the present invention may be the same or similar to the image processors 120 and 320 according to the first and second exemplary embodiments of the present invention.

The frame rate converter 421 selectively converts the frame rate of the image corresponding to the image signal inputted from the image processor 420 to be outputted to the display part 150 according to a control of the controller 460. The frame rate converter 421 according to the third exemplary embodiment of the present invention may be the same or similar to the frame rate converters 121 and 321 according to the first and second exemplary embodiments of the present invention.

The controller 460 controls the image processing apparatus 400 as a whole. The controller 460 controls the receiver 110, the image processor 420 and the frame rate converter 421 to display the image corresponding to the image signal received from the external image device 200 or broadcasting stations, on the display part 150.

The controller 460 determines whether to convert the frame rate of the image corresponding to the image signal received by the receiver 110, and controls the frame rate converter 421 to convert the frame rate of the image corresponding to the image signal if determining to convert the frame rate thereof.

If it is determined not to convert the frame rate of the image corresponding to the image signal by the controller 460, the frame rate converter 421 outputs the image signal directly to the display part 150.

The controller 460 according to the third exemplary embodiment of the present invention may be the same or similar to the controllers 160 and 360 according to the first and second exemplary embodiments of the present invention.

As described above, the present invention provides an image processing apparatus which increases a frame rate of an overlapping image while keeping a display quality of an image, a display apparatus and an image processing method.

Also, the present invention provides an image processing apparatus which increases a frame rate of an overlapping image while keeping a display quality of an image even if an overlapping region is not recognizable from an overlapping image that is inputted from the outside, and a display apparatus and an image processing method.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. An image processing apparatus, comprising:
an image processor which processes an image corresponding to an image signal;
a frame rate converter which converts a frame rate of the image corresponding to the image signal that is processed by the image processor; and
a controller which controls at least one of the image processor and the frame rate converter to convert the frame rate of the image corresponding to the image signal in response to it being determined that the frame rate of the image corresponding to the image signal is different from a reference frame rate.

2. The image processing apparatus according to claim 1, wherein the image processor selectively outputs a processed image signal to the frame rate converter, and the controller controls the image processor to output the processed image signal to the frame rate converter in response to it being determined that the frame rate of the image corresponding to the image signal is different from the reference frame rate.

3. The image processing apparatus according to claim 1, wherein the frame rate converter selectively converts the frame rate of the image corresponding to the image signal processed by the image processor, and the controller controls the frame rate converter to convert the frame rate of the image corresponding to the image signal in response to it being determined that the frame rate of the image corresponding to the image signal is different from the reference frame rate.

4. The image processing apparatus according to claim 2, wherein in response to an image of an image signal inputted to the frame rate converter having a main image and an overlapping image that overlaps a part of the main image, the controller controls the frame rate converter so that an overlapping image region of an inserted frame is copied from one of the corresponding regions of inputted image frames of the image signal inputted for an increase of the frame rate.

5. The image processing apparatus according to claim 4, further comprising a receiver which receives an image signal having overlapping region information on the overlapping image region, wherein the controller controls the frame rate converter to convert the frame rate of the image based on the overlapping region information.

6. The image processing apparatus according to claim 4, wherein the controller detects the overlapping image region based on brightness differences between pixels of the image inputted to the frame rate converter, and controls the frame rate converter to convert the frame rate of the image based on the detected overlapping image region.

7. The image processing apparatus according to claim 4, further comprising a storage part which stores overlapping region information on the overlapping image region, wherein the controller controls the frame rate converter based on the overlapping region information stored in the storage part.

8. The image processing apparatus according to claim 2, further comprising a user input part which receives a user's command, wherein in response to the user's command and the image corresponding to the image signal inputted to the frame rate converter including a main image and an overlapping image that overlaps the part of the main image, the controller controls the frame rate converter so that an overlapping image region of an inserted frame is copied from one of corresponding regions of inputted image frames regions for an increase of the frame rate.

9. The image processing apparatus according to claim 2, wherein the controller controls the image processor to convert a frame rate of an overlapping image region and a frame rate of a remaining region of the inputted image independently from each other to increase the frame rate, in response to the image corresponding to the image signal having a main image and an overlapping image that overlaps a part of the main image.

10. The image processing apparatus according to claim 2, further comprising a display part which includes a plasma display panel to display the frame rate converted image based on the image signal.

11. An image processing apparatus, comprising:
an image processor which processes an image corresponding to an image signal; and
a frame rate converter which converts a frame rate of the image corresponding to the image signal that is processed by the image processor,
wherein, in response to the image corresponding to the image signal inputted to the frame rate converter having a main image and an overlapping image that overlaps a part of the main image, the frame rate is converted such that a region of the overlapping image of an inserted frame may be copied from one of corresponding regions of inputted image frames for an increase of the frame rate.

12. An image processing apparatus, comprising:
an image processor which processes an image corresponding to an image signal;
a frame rate converter which converts a frame rate of the image corresponding to the image signal that is processed by the image processor; and
a controller which controls the image processor to convert the frame rate of an overlapping image region and a remaining region of the inputted image independently from each other to increase the frame rate in response to the image corresponding to the image signal inputted to the frame rate converter having a main image and an overlapping image that overlaps a part of the main image.

13. An image processing method, comprising:
determining whether a frame rate of an image corresponding to an image signal is different from a reference frame rate; and
converting the frame rate of the image corresponding to the image signal in response to the frame rate of the image being different from the reference frame rate.

14. The image processing method according to claim 13, wherein the converting of the frame rate comprises, if the image includes a main image and an overlapping image that overlaps a part of the main image, inserting a frame comprising a region of the overlapping image copied from one of the corresponding regions of inputted image frames for an increase of the frame rate.

15. The image processing method according to claim 14, further comprising receiving an image signal having overlapping region information on the overlapping image region, wherein the inserting of the frame having the copied overlapping image region comprises inserting the frame having the copied overlapping image region based on the received overlapping region information.

16. The image processing method according to claim 14, wherein the converting of the frame rate further comprises detecting the overlapping image region based on brightness differences between pixels of the image, and the inserting of the copied frame is based on the detected overlapping region information.

17. The image processing method according to claim 14, further comprising storing overlapping region information on the overlapping image region, wherein the inserting of the copied frame is based on the stored overlapping region information.

18. The image processing method according to claim 13, wherein the converting of the frame rate comprises detecting an overlapping image region based on brightness differences between pixels of the image to increase the frame rate in response to the image including a main image and an overlapping image that overlaps a part of the main image; receiving a user's command whether to insert a frame whose overlapping image region is copied from a region corresponding to frames of the inputted image, and inserting the frame having the copied overlapping image region according to the user's command.

19. An image processing method, comprising:
determining whether an image corresponding to an image signal includes a main image and an overlapping image that overlaps a part of the main image; and
inserting, in response to the image including a main image and an overlapping image that overlaps the part of the main image, a frame comprising a region of the overlapping image copied from one of corresponding regions of inputted image frame regions of the image signal for an increase of the frame rate of the image.

20. An image processing method, comprising:
determining whether an image corresponding to an image signal includes a main image and an overlapping image that overlaps a part of the main image; and
converting a frame rate of the overlapping image region and a remaining region of the inputted image independently from each other to increase the frame rate of the image in response to the image including the main image and the overlapping image that overlaps the part of the main image.
